# EUROPEAN PATENT APPLICATION

(11) **EP 3 018 639 A1**
(43) Date of publication of application: **11.05.2016**
(21) Application number: 15193778.6
(22) Date of filing: 10.11.2015
(51) Int. Cl.: G07G 1/14, G06F 3/12, G06F 1/16, G06Q 20/20

(54) **COMMODITY SALES DATA PROCESSING APPARATUS, INFORMATION PROCESSING TERMINAL AND CONTROL METHOD FOR THE SAME**

(30) Priority: 10.11.2014 JP 2014228348
(71) Applicant: Toshiba TEC Kabushiki Kaisha, Tokyo 141-0032 (JP)
(72) Inventor: NISHIIE, Toru, Shinagawa-ku, Tokyo 141-0032 (JP)
(74) Representative: Takeuchi, Maya

(57) **Abstract**

A tablet terminal is possible to select any one of a plurality of docking stations on the condition that it can be detached from the docking station. The tablet terminal sends printing data of a receipt to the selected docking station. When receiving the printing data of the receipt from the tablet terminal, the docking station outputs the printing data to a printer to issue the receipt.

## Description

### FIELD

Embodiments described herein relate to a commodity sales data processing apparatus in which a portable information processing terminal is combined with a docking station in a detachable manner, the information processing terminal of the apparatus and a control method for the information processing terminal.

### BACKGROUND

In recent years, a commodity sales data processing apparatus in which a portable information processing terminal equipped with a touch panel such as a tablet terminal (also referred to as a tablet PC) is combined with a stationary docking station in a detachable manner becomes more and more popular. In such a commodity sales data processing apparatus, the information processing terminal is used as an input device and a display device of commodity sales data. The docking station comprises a printer, a drawer and the like. In order to make the best use of the portability thereof, it is assumed that the information processing terminal is capable of carrying out wireless data communication with the docking station. Then, after a salesman who brings the information processing terminal inputs sales data of commodities purchased by a customer into the information processing terminal in the store, when an instruction to issue a receipt is given by the salesman, receipt printing data is wirelessly transmitted from the information processing terminal to the docking station. The receipt printing data is output to the printer through the docking station, and then the receipt is issued.

In such a conventional commodity sales data processing apparatus, the docking station serving as the transmission destination of the receipt printing data that is wirelessly transmitted from the information processing terminal is specified for each information processing terminal in advance. As a result, even though there is a docking station nearest to the salesman who gives an instruction to issue a receipt from the information processing terminal, the receipt cannot be issued if the docking station is not the data transmission destination of the information processing terminal. The receipt is issued from a printer of another docking station that has already been set to be the data transmission destination of the information processing terminal. Thus, in some cases, it takes time to transfer a receipt.

### BRIEF DESCRIPTION OF THE DRAWINGS

Fig. 1 is a perspective view illustrating a commodity sales data processing apparatus in a state in which a tablet terminal is mounted on a docking station in one embodiment;
Fig. 2 is a perspective view illustrating the commodity sales data processing apparatus in a state in which the tablet terminal is detached from the docking station;
Fig. 3 is a block diagram illustrating constitutions of main portions of the tablet terminal and the docking station;
Fig. 4 is a schematic diagram illustrating an example in which the commodity sales data processing apparatus is introduced into a store;
Fig. 5 is a schematic diagram illustrating a data structure of a printer monitoring table provided in the tablet terminal;
Fig. 6 is a flowchart illustrating the main procedure of an information processing executed by a processor of the docking station according to a printer informing program;
Fig. 7 is a flowchart illustrating the main procedure of an information processing executed by a processor of the tablet terminal according to a control program;
Fig. 8 is a flowchart illustrating the main procedure of an information processing executed by the processor of the tablet terminal according to a control program;
Fig. 9 is a schematic diagram illustrating an example of printer buttons displayed on a screen of the tablet terminal; and
Fig. 10 is a schematic diagram illustrating another example of the printer buttons displayed on a screen of the tablet terminal.

### DETAILED DESCRIPTION

In accordance with one embodiment, a commodity sales data processing apparatus includes a portable information processing terminal carrying an input device and a plurality of docking stations each of which comprises a printer. In addition, the information processing terminal is capable of wirelessly communicating with each docking station. Such an information processing terminal comprises a sales processing module, a checkout processing module, a creation module, a selection module and a transmission module. The sales processing module carries out a sales processing on commodity sales data on basis of data relating to commodity sales processing input through the input device. The checkout processing module processes checkout data on basis of data relating to checkout processing input through the input device. The creation module creates printing data of a receipt on basis of the commodity sales data and the checkout data. The selection module selects any one of a plurality of docking stations on the condition that the information processing terminal is detached from the docking station. The transmission module transmits the printing data of a receipt to the selected docking station. On the other hand, the docking station further includes an issuing module which outputs the printing data to the printer to issue the receipt when receiving the printing data of the receipt from the information processing terminal.

Preferably, the information processing terminal further comprises a display device and a display module which displays an image used for a user to designate any one of the plurality of docking stations on the display device.

Preferably, the selection module selects a docking station that is designated from the image through the input device.

Preferably, the docking station further comprises an informing module which informs the information processing terminal of a state of the printer; and the information processing module is possible to identify the state of the printer of each of the plurality of docking stations through the image displayed by the display module.

Preferably, the information processing terminal further comprises a notification module configured to give a notification on urging a user to reselect a docking station when a printer of the docking station designated from the image through the input device is in print or in error.

The present invention further relates to an information processing terminal which is capable of carrying out wireless communication with each of the plurality of docking stations including printers at least to constitute a commodity sales data processing apparatus, comprising: an input device; a sales processing module configured to carry out a sales processing on commodity sales data on basis of data relating to commodity sales processing input through the input device; a checkout processing module configured to process checkout data on basis of data relating to checkout processing input through the input device; a creation module configured to create printing data of a receipt on basis of the commodity sales data and the checkout data; a selection module configured to select any one of the plurality of docking stations on the condition that the information processing terminal can be detached from the docking station; and a transmission module configured to transmit the printing data of the receipt created by the creation module to the docking station selected by the selection module.

The present invention further relates to a control method for the information processing terminal, including: carrying out a sales processing on commodity sales data on basis of data relating to commodity sales processing input through an input device; carrying out a processing on checkout data on basis of data relating to checkout processing input through the input device; creating printing data of a receipt on basis of the commodity sales data and the checkout data; selecting any one of the plurality of docking stations on the condition that the information processing terminal can be detached from the docking station; and transmitting the created printing data of the receipt to the selected docking station.

Preferably, the control method for the information processing terminal further includes displaying an image used for a user to designate any one of the plurality of docking stations, and selecting a docking station that is designated from the image through the input device.

Preferably, the control method for the information processing terminal further includes : informing the information processing terminal of a state of the printer so that the information processing module is possible to identify the state of the printer of each of the plurality of docking stations through the image displayed at the displaying step.

Preferably, the control method for the information processing terminal further includes : giving a notification on urging a user to reselect a docking station when a printer of the docking station designated from the image through the input device is in print or in error.

The present invention also relates to a control program for causing an information processing terminal computer consisting of a commodity sales data processing apparatus capable of carrying out wireless communication with a plurality of docking stations including a printer, to execute as an information processing apparatus.

Hereinafter, embodiments of a commodity sales data processing apparatus which is capable of reducing waste of time that is required to transfer a receipt issued by the docking station according to an issue instruction from the portable information processing terminal are described with reference to the accompanying drawings.

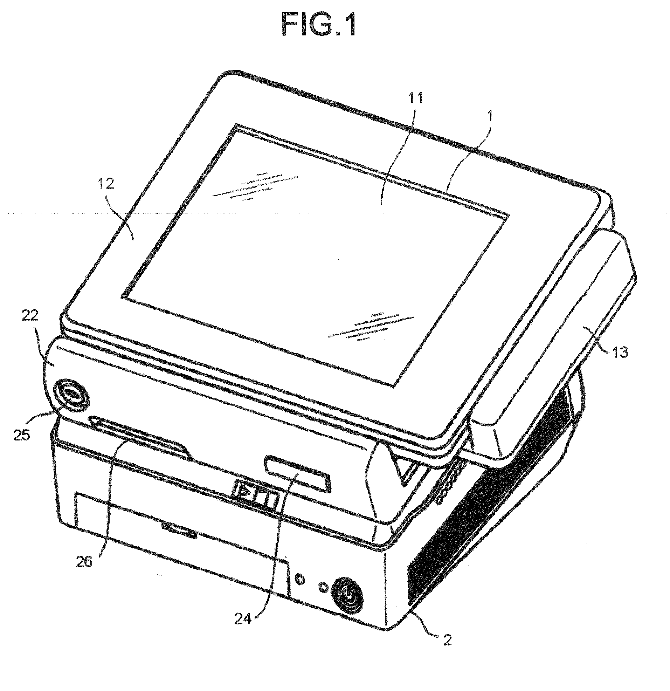

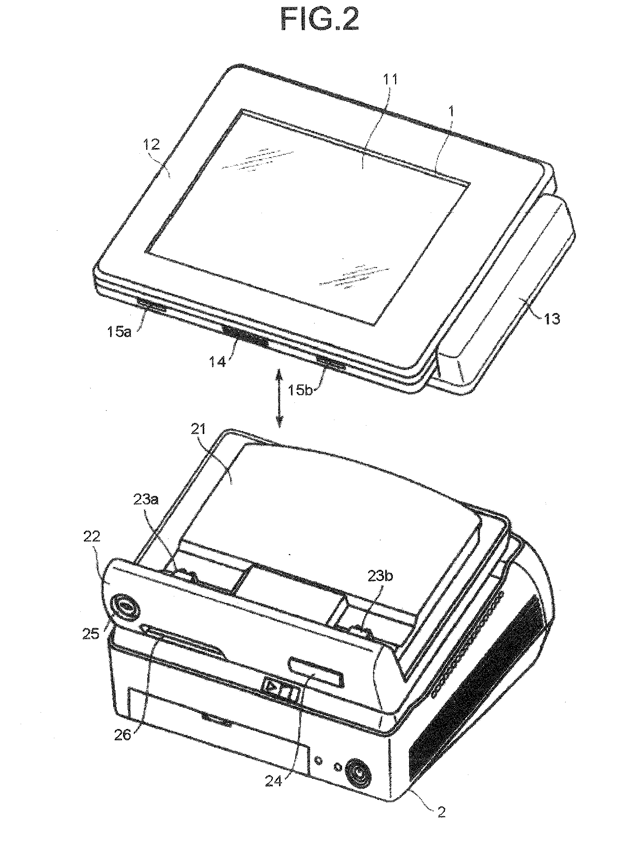

Fig. 1 and Fig. 2 are perspective views illustrating the appearance of the commodity sales data processing apparatus. The commodity sales data processing apparatus includes a tablet terminal 1 serving as one kind of portable information processing terminal, and a stationary docking station 2 on which the tablet terminal 1 is mounted in a detachable manner. Fig. 1 illustrates a state in which the tablet terminal 1 is mounted on the docking station 2. Fig. 2 illustrates a state in which the tablet terminal 1 is detached from the docking station 2.

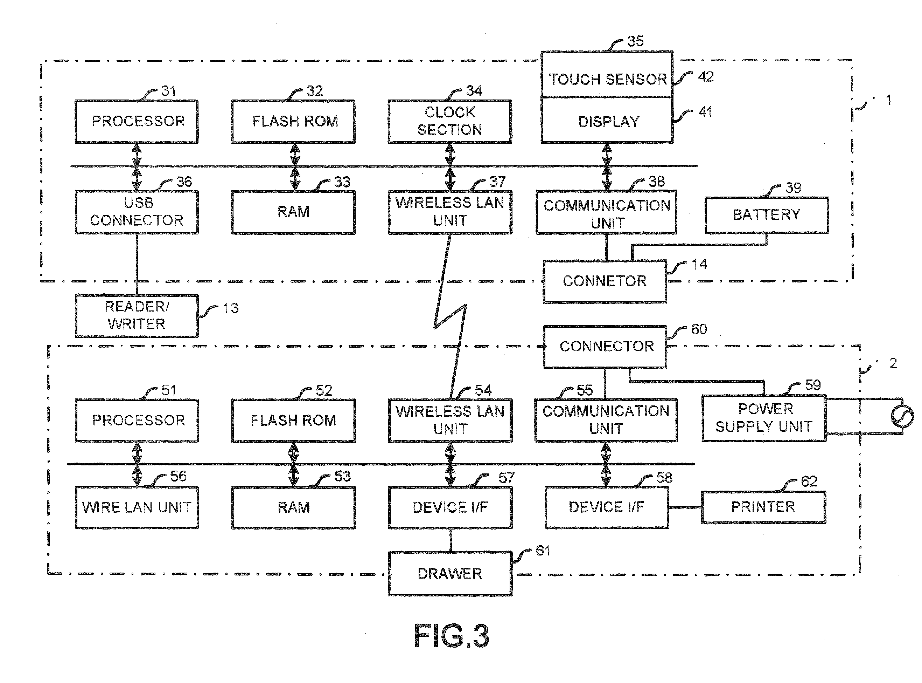

The tablet terminal 1 is an electronic equipment formed into a rectangular flat shape of which most of the surface is a display screen 11. The display screen 11 is constituted by a touch panel 35 (refer to Fig. 3). The touch panel 35 functions as an input device and a display device of data relating to commodity sales processing. The touch panel 35 also has a signature pad function for receiving a signature input and carrying out a reception confirmation of a user of credit card (for example).

The tablet terminal 1 is covered by an electronic equipment storing jacket 12 around itself. The jacket 12 stores the tablet terminal 1 in a state in which the display screen 11 is exposed. The display screen 11 of the tablet terminal 1 stored in the jacket 12 is arranged at a position slightly lower than the edge of the jacket 12. In this way, even if the tablet terminal 1 is dropped on a floor by mistake, it is possible to prevent the damage of the display screen 11.

A reader/writer 13 is installed on the jacket 12. The reader/writer 13 reads data recorded in a data card. The reader/writer 13 also writes data into the data card. In addition to a settlement card such as a credit card, a debit card, an electronic money card, a prepaid card and the like, the card may be various cards which records information relating to settlement processing such as a member's card, a point card and the like. The reader/writer 13 may be any one of a magnetic device, a contact type device, or a non-contact type device, and may also be a device containing various kinds of devices. Further, it is exemplified in Fig. 1 and Fig. 2 that the reader/writer 13 is a magnetic device.

The jacket 12 includes a connector 14 for electrically connecting with the docking station 2, and a pair of locking holes 15a, 15b for mechanically connecting with the docking station 2. The locking holes 15a, 15b are formed on both sides across the connector 14.

The top surface of the docking station 2 is set to a mounting surface 21 of the tablet terminal 1. The docking station 2 comprises an abutting section 22 against the tablet terminal 1 at the front side of the mounting surface 21. A connector 60 (refer to Fig. 3) and a pair of locking claws 23a, 23b are arranged at the side of the mounting surface 21 of the abutting section 22.

The user mounts the tablet terminal 1 on the mounting surface 21 in a state of arranging the display screen 11 facing upward. At this time, the surface of the jacket 12 formed by the connector 14 and the locking holes 15a, 15b is pressed against the abutting section 22. In this way, the connector 14 of the jacket 12 electrically connects to the connector 60 of the abutting section 22. Through the connection, it is possible to carry out wire communication between the tablet terminal 1 and the docking station 2. A battery 39 (refer to Fig. 3) equipped in the tablet terminal 1 is charged through the electrical power supply from the side of the docking station 2.

By pressing the tablet terminal 1 against the abutting section 22, the locking claws 23a and 23b at the side of the abutting section 22 are respectively inserted into the locking holes 15a and 15b at the side of the jacket 12. Then, the locking claws 23a and 23b are locked into the edges of the locking holes 15a and 15b. Through the locking operation, the tablet terminal 1 is mechanically connected with and locked to the docking station 2.

At the side opposite to the mounting surface 21 of the abutting section 22, a lock releasing lever 24 and a cylinder lock 25 are arranged. The lock releasing lever 24 slides freely in the horizontal direction, and moves together with the locking claws 23a and 23b. That is, the lock releasing lever 24 is made to side to either one direction to release the locked state of the tablet terminal 1 locked by the locking claws 23a and 23b. The cylinder lock 25 fixes the lock releasing lever 24 through the locked state. When the lock releasing lever 24 is fixed, the tablet terminal 1 cannot be detached from the docking station 2. Thus, it is possible to previously prevent the tablet terminal 1 from being detached from the docking station 2 and being stolen illegally.

The docking station 2 connects with a drawer 61 (refer to Fig. 3) for housing cash and the like. Further, a printer 62 (refer to Fig. 3) for printing a receipt is built in the docking station 2. Then, the docking station 2 issues the receipt printed by the printer 62 from a receipt issuing port 26.

The tablet terminal 1 and the docking station 2 respectively include wireless LAN units 37 and 54 (refer to Fig.3) based on, for example, Wi-Fi (registered trademark) standard. Under the action of these wireless LAN units 37 and 54, even in a state in which the tablet terminal 1 is detached from the docking station 2 as shown in Fig. 2, it is also possible to carry out wireless communication between the tablet terminal 1 and the docking station 2.

Fig. 3 is a block diagram illustrating the constitutions of main portions of the tablet terminal 1 and the docking station 2. The tablet terminal 1 comprises a processor 31, a flash ROM (Read Only Memory) 32, a RAM (Random Access Memory) 33, a clock section 34, the touch panel 35, a USB (Universal Serial Bus) connector 36, a wireless LAN unit 37 and a communication unit 38. The tablet terminal 1 further includes the battery 39 serving as a driving power supply.

The processor 31 is a central part of a computer. The processor 31 controls each section to realize various functions of the tablet terminal 1 according to an operating system or an application program.

The flash ROM 32 is a main storage part of the computer. The flash ROM 32 stores the operating system and the application program mentioned above. As occasion demands, the flash ROM 32 also stores data required to execute various processing by the processor 31.

The RAM 33 is also a main storage part of the computer mentioned above. The RAM 33 stores data required to execute various processing by the processor 31 as needed. Further, the RAM 33 is also used as a work area for the processor 31 when various processing is executed.

The clock section 34 counts the current date and time.

The touch panel 35 includes a touch sensor 42 serving as an input device arranged in the display part of a panel type display 41 serving as a display device. The screen of the display 41 where the touch sensor 42 is arranged is the display screen 11 of the tablet terminal 1.

The USB connector 36 is used to detachably connect with various USB devices having communication system conforming to the USB standard. In the present embodiment, the reader/writer 13 is connected to the USB connector 36.

The wireless LAN unit 37 carries out data communication through the wireless LAN. The wireless LAN unit 37 is mainly used to carry out wireless data communication with the docking station 2.

The communication unit 38 communicates with the docking station 2 connected through the connector 14. For example, a USB communication device can be used as the communication unit 38.

The docking station 2 comprises a processor 51, a flash ROM 52, a RAM 53, a wireless LAN unit 54, a communication unit 55, a wire LAN unit 56, a plurality of device interfaces 57 and 58 and a power supply unit 59.

The processor 51 is a central part of a computer. The processor 51 controls each section to realize various functions of the docking station 2 according to an operating system or an application program.

The flash ROM 52 is a main storage part of the computer. The flash ROM 52 stores the operating system and the application program mentioned above. As occasion demands, the flash ROM 52 also stores data required to execute various processing by the processor 51.

The RAM 53 is also a main storage part of the computer mentioned above. The RAM 53 stores data required to execute various processing by the processor 51 as needed. Further, the RAM 53 is also used as a work area for the processor 51 when various processing is executed.

The wireless LAN unit 54 carries out data communication through the wireless LAN. The wireless LAN unit 54 is mainly used to carry out wireless data communication with the tablet terminal 1.

The communication unit 55 communicates with the tablet terminal 1 connected through the connector 60. For example, a USB communication device can be used as the communication unit 55.

The wire LAN unit 56 carries out data communication through the wire LAN. For example, an existing communication device conforming to the IEEE 802.3 series standard can be used as the wire LAN unit 56. The wire LAN unit 56 is mainly used to carry out wire data communication with a POS (Point of sales) server (not shown).

The device interfaces 57 and 58 electrically connect with various device machines, and carry out data signal transmission/reception with these device machines. The docking station 2 connects the drawer 61 to the device interface 57, and connects a printer 62 used for printing a receipt to the device interface 58. Further, the number of the device interfaces 57 and 58 is not limited to 2, and it may be only one or more than 3. The device machines are also not limited to the drawer 61 and the printer 62. For example, a barcode scanner, a display for customer and the like are also possible to connect with the device interfaces 57 and 58.

The power supply unit 59 generates power required to drive the docking station 2 to supply it to all sections. Further, the power supply unit 59 also has a function of charging the battery 39 of the tablet terminal 1. Consequently, during the period when the tablet terminal 1 is mounted on the mounting surface 21 of the docking station 2 and the connector 60 of the docking station 2 is connected with the connector 14 of the tablet terminal 1, the battery 39 of the tablet terminal 1 is charged by the power supply unit 59.

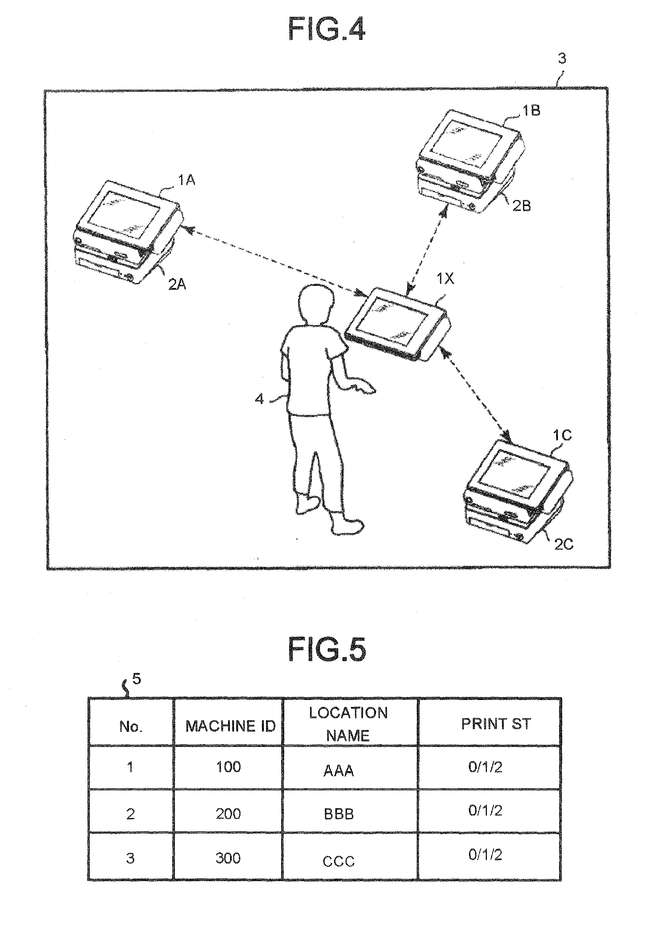

Fig. 4 is a schematic diagram illustrating an example in which the commodity sales data processing apparatus of the present embodiment is introduced into a store 3. It is exemplified in this example that three commodity sales data processing apparatuses are introduced into the store 3. The docking stations 2 (2A, 2B, 2C) are separately arranged at three positions in the store 3. The tablet terminals 1 (1A, 1B, 1C) are respectively mounted on the docking stations 2 mentioned above in a detached manner.

A person 4 in charge of customers of the store 3 separates the tablet terminal 1 from any one of the docking stations 2 and brings it to provide customer service. In Fig. 4, the tablet terminal brought by the person 4 in charge of customers is indicated by a reference numeral "IX". The tablet terminal IX is any one of the tablet terminals 1A, 1B and 1C.

The person in charge of customers operates the touch panel 35 to input data relating to commodities purchased by a customer at the time of customer service. The processor 31 of the tablet terminal IX carries out a sales processing on commodity sales data on basis of data relating to commodity sales processing (sales processing module).

Further, when receiving a request to checkout from the customer, the person in charge of customers operates the touch panel 35 to input data relating to checkout of customer. The processor 31 of the tablet terminal IX carries out a processing on checkout data on basis of data relating to the settlement (checkout processing module).

The processor 31 of the tablet terminal IX creates printing data of a receipt based on the commodity sales data and the checkout data (creation module). The printing data is transmitted to any one of the docking stations 2A, 2B and 2C through wireless communication, and then the receipt is issued.

In the present embodiment, the person in charge of customers designates any one docking station 2Y (2Y represents any one of 2A, 2B and 2C) from a plurality of docking stations 2A, 2B and 2C. The processor 31 of the tablet terminal IX selects the docking station 2Y designated from the docking stations 2A, 2B and 2C (selection module). Then, the processor 31 transmits receipt printing data to the selected docking station 2Y through wireless communication (transmission module). After receiving the receipt printing data, the docking station 2Y starts the printer 62 to print the received receipt printing data on a receipt paper to issue a receipt (issuing module).

In order to realize such a receipt issuing function, each of the tablet terminals 1 (1A, 1B and 1C) has a printer monitoring table 5 (refer to Fig. 5). For example, the printer monitoring table 5 is stored in the flash ROM 32.

As shown in Fig. 5, the printer monitoring table 5 stores records including a machine ID, a location name and a printing status in the order of a series of record numbers. The machine ID is the data used to identify the docking stations 2 (2A, 2B and 2C) individually. A unique machine ID is set for each of the docking stations 2 respectively. The location name is information used for specifying the location where the docking station 2 identified with the corresponding machine ID is arranged. The person in charge of customers can know the locations where the docking stations 2 are arranged from these location names. The printing status indicates the state of the printer 62 connected with the docking station 2 that is identified with the corresponding machine ID. The printing status is "0" when the printer 62 is in a non-operated state, and is "1" when the printer 62 is in print. Further, the printing status is "2" when an error occurs in the printer 62.

In this way, the tablet terminal 1 has a function of monitoring the state of the printer 62 that is connected with each docking station 2 through the printer monitoring table 5. In addition, in order to realize the monitoring function, the processor 51 of each docking station 2 has a function serving as an informing module informing the tablet terminal 1 of the state of printer.

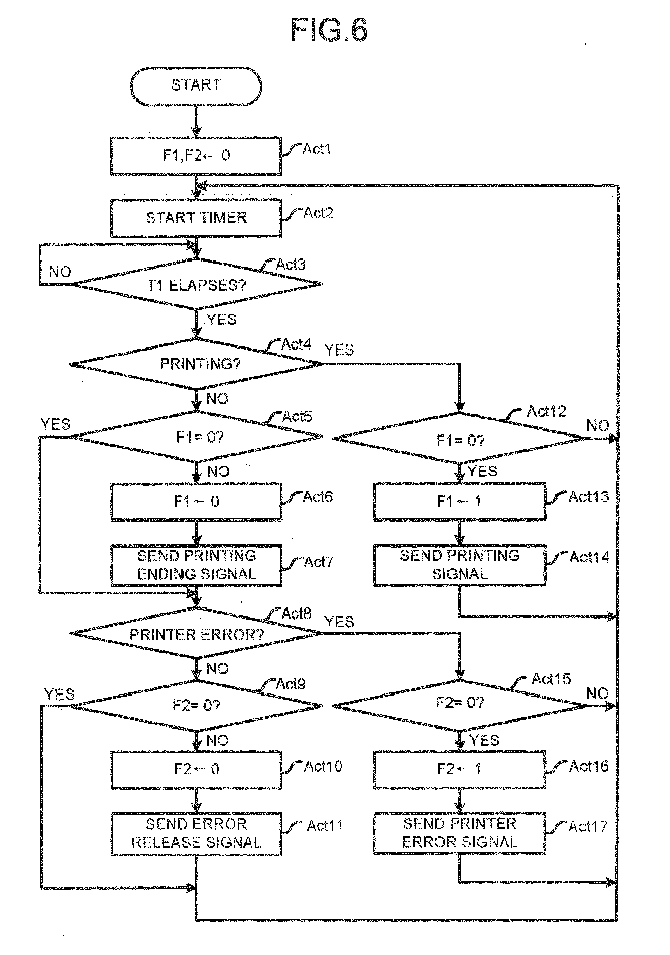

The function serving as the informing module is described according to the flowchart in Fig. 6. Fig. 6 illustrates main procedures of an information processing executed by the processor 51 according to a printer informing program stored in the flash ROM 52. The processing content described below together with that shown in Fig. 6 is only an example, and various processing that can obtain same results is applicable.

When the printer informing program is started, the processor 51 resets a printing flag F1 and an error flag F2 to "0" first (ACT 1). When the printer 62 that is connected to the docking station 2 is in print, the printing flag F1 is set to "1". When an error occurs in the printer 62 that is connected to the docking station 2, the error flag F2 is set to "1". Both the printing flag F1 and the error flag F2 are stored in the RAM 53.

The processor 51 starts a timer (not shown) inside the docking station 2 (ACT 2). Then, the processor 51 waits until the clock time of the timer reaches a sampling time T1 (ACT 3). The sampling time T1 is a preset positive time.

When the sampling time T1 elapses (YES in ACT 3), the processor 51 confirms whether or not the printer 62 that is connected to the docking station 2 is in print (ACT 4). For example, the processor 51 sends a state inquiry command to the printer 62 that is connected to the device interface 58. After receiving the command, the printer 62 replies information indicating whether or not it is in print, or whether or not an error such as a paper jam, a paper run out and the like occurs. In this way, the processor 51 can know whether or not the printer 62 is in print according to the response from the printer 62.

If it is not in print (NO in ACT 4), the processor 51 examines the printing flag F1 (ACT 5). In a case in which the printing flag F1 is set to "1" (NO in ACT 5), the printer 62 is in print at the sampling time last time. In this case, the processor 51 resets the printing flag F1 to "0" (ACT 6). Further, the processor 51 wirelessly sends a printing ending signal through the wireless LAN unit 54 (ACT 7).

If the printing flag F1 is reset to "0" in ACT 5 (YES in ACT 5), or the processing in ACT 6 and ACT 7 is ended, the processor 51 confirms whether or not an error occurs in the printer 62 (ACT 8). As stated above, the printer 62 replies information indicating whether or not an error occurs to the state inquiry command from the processor 51. In this way, the processor 51 can know whether or not an error has occurred in the printer 62.

If no error occurs in the printer 62 (NO in ACT 8), the processor 51 examines the error flag F2 (ACT 9). In a case in which the error flag F2 is set to "1" (NO in ACT 9), an error has occurred in the printer 62 at the sampling time last time. In this case, the processor 51 resets the error flag F2 to "0" (ACT 10). Further, the processor 51 wirelessly sends an error release signal through the wireless LAN unit 54 (ACT 11).

If the error flag F2 is reset to "0" in ACT 9 (YES in ACT 9), or the processing in ACT 10 and ACT 11 is ended, the processor 51 returns to carry out processing in ACT 2.

On the other hand, if the printer 62 is in print in ACT 4 (YES in ACT 4), the processor 51 examines the printing flag F1 (ACT 12). In a case in which the printing flag F1 is reset to "0" (YES in ACT 12), the printer 62 is not in print at the sampling time last time. In this case, the processor 51 sets the printing flag F1 to "1" (ACT 13). Further, the processor 51 wirelessly sends a printing signal through the wireless LAN unit 54 (ACT 14).

If the printing flag F1 is set to "1" in ACT 12 (NO in ACT 12), or the processing in ACT 13 and ACT 14 is ended, the processor 51 returns to carry out processing in ACT 2.

Further, if an error has occurred in the printer 62 in ACT 8 (YES in ACT 8), the processor 51 examines the error flag F2 (ACT 15). In a case in which the error flag F2 is reset to "0" (YES in ACT 15), no error occurs in the printer 62 at the sampling time last time. In this case, the processor 51 sets the error flag F2 to "1" (ACT 16). Further, the processor 51 wirelessly sends a printer error signal through the wireless LAN unit 54 (ACT 17).

If the error flag F2 is set to "1" in ACT 15 (NO in ACT 15), or the processing in ACT 16 and ACT 17 is ended, the processor 51 returns to carry out the processing in ACT 2.

After returning to the processing in ACT 2, the processor 51 restarts the timer. Then, if the sampling time T1 elapses again (YES in ACT 3), the processor 51 executes the processing following ACT 4 again. In this way, the processor 51 repeatedly executes the processing following ACT 4 every time a sampling time T1 elapses.

Thus, every time a printing operation is started in the printer 62 that is connected with the docking station 2, the processor 51 of the docking station 2 wirelessly sends the printing signal. Then, every time this printing operation is ended, the processor 51 wirelessly sends the printing ending signal. Further, if an error such as a paper jam, a paper run out and the like occurs in the printer 62, the processor 51 wirelessly sends the printer error signal. Then, if the error is released, the processor 51 wirelessly sends the error release signal.

The signals wirelessly sent from the docking station 2 are possible to be received by the tablet terminal 1 that is being operated in the store 3. In this case, not only the tablet terminals 1A, 1B and 1C that are respectively mounted on the docking stations 2A, 2B and 2C, but also the tablet terminals IX that are detached from the docking stations 2A, 2B and 2C can receive the signals mentioned above.

On the other hand, a control program is installed in the tablet terminal 1 for enabling a computer to function as the information processing terminal of the commodity sales data processing apparatus. For example, the control program is stored in the flash ROM 32. In the tablet terminal 1, the computer consists of the processor 31, the flash ROM 32 and the RAM 33.

The following functions 1∼7 can be realized by the computer of the tablet terminal 1 according to the control program.

Function 1: A function of carrying out a sales processing on commodity sales data on basis of data relating to the commodity sales processing input through the touch panel 35. That is, a function of registering the commodity sales data including a commodity code, a commodity name, a sales price, a sales volume and the like of the commodity purchased by the customer in a transaction area of the RAM 33.

Function 2: A function of carrying out a processing on checkout data on basis of data relating to the checkout input through the touch panel 35. For example, a function of reducing the checkout amount from the electronic money balance of the card in the case in which the data of electronic money card is read by the reader/writer 13, and a function of registering checkout data indicating that the checkout amount is paid by electronic money in the transaction area. Moreover, in an application to grant a service point to the customer, a function of registering the service points calculated according to the checkout amount together with the checkout data in the transaction area is included.

Function 3: A function of creating printing data of a receipt based on the commodity sales data and the checkout data that are registered in the transaction area.

Function 4: A function of selecting any one of the plurality of the docking stations 2 as a receipt issuing machine on the condition that the tablet terminal 1 is detached from the docking station 2.

Function 5: A function of transmitting the printing data of the receipt to the docking station 2 that is selected as the receipt issuing machine.

Function 6: A function of displaying an image used for the user to designate any one of the plurality of docking stations 2 on the touch panel 35. The aforementioned function 4 selects the docking station 2 designated from the image through the touch panel 35 as the receipt issuing machine. Further, it is assumed that the state of the printer 62 of each of the plurality of the docking stations 2 is possible to be identified in the image.

Function 7: A function of carrying out a notification for urging the user to reselect the docking station 2 when the printer 62 of the docking station 2 designated from the image through the touch panel 35 is in print or in error.

Then, the functions 4∼7 are described below in detail.

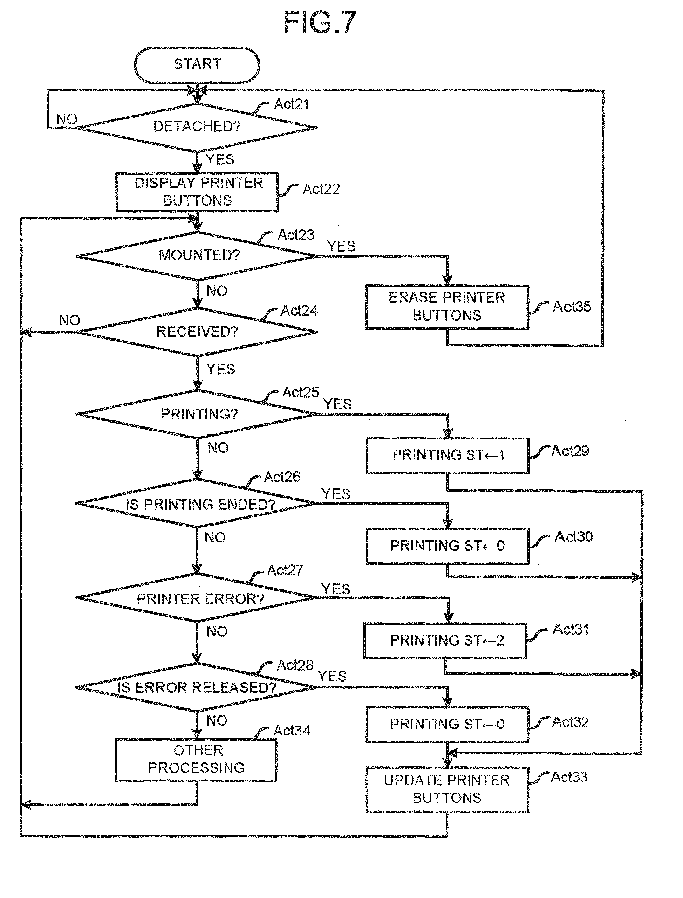

Fig. 7 is a flowchart illustrating the main procedures of information processing relating to the function 4 and the function 6 executed by the processor 31 of each tablet terminal 1 according to the control program. Further, the processing content described below together with that shown in Fig. 7 is an example, and various processing that can obtain same results is applicable.

The processor 31 monitors whether or not the tablet terminal 1 is detached from the docking station 2 (ACT 21). In a case in which the tablet terminal 1 is mounted on the docking station 2, at least any one of pins of the connector 14 is energized. Therefore, the processor 31 monitors whether or not the tablet terminal 1 is detached from the docking station 2 according to whether or not the pin is energized. In a case in which the aforementioned pin is energized, the tablet terminal 1 is mounted on the docking station 2. In this case (NO in ACT 21), the processor 31 continues the monitoring.

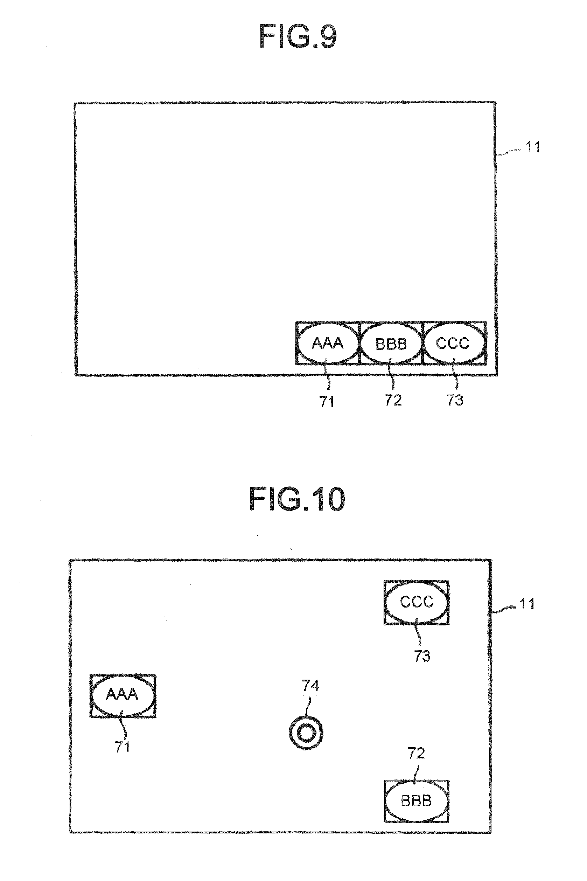

If the tablet terminal 1 is detached from the docking station 2, the aforementioned pin is not energized. In this case (YES in ACT 21), the processor 31 displays images of printer buttons 71, 72 and 73 (refer to Fig. 9) on the touch panel 35 (ACT 22: display module).

An example of the images of the printer buttons 71, 72 and 73 is shown in Fig. 9. In Fig. 9, the printer button 71 corresponds to the docking station 2A. A location name AAA indicating a location where the docking station 2A is arranged is displayed on the printer button 71. The printer button 72 corresponds to the docking station 2B. A location name BBB indicating a location where the docking station 2B is arranged is displayed on the printer button 72. The printer button 73 corresponds to the docking station 2C. A location name CCC indicating a location where the docking station 2C is arranged is displayed on the printer button 73. The location names AAA, BBB and CCC are stored in the printer monitoring table 5.

Further, the background color of each location name varies with the values of the printing status stored in the printer monitoring table 5. For example, when the value of the printing status is "0", the background color is white. For example, when the value of the printing status is "1", the background color is blue. For example, when the value of the printing status is "2", the background color is red. Thus, the person in charge of customers serving as the user of the tablet terminal 1 can be aware of the state of the printers 62 which are connected with the docking stations 2 corresponded to the printer buttons 71, 72 and 73 according to the background color of each of the printer buttons 71, 72 and 73. For example, in a case in which the background color of the printer button 71 is white, it can be aware that the printer 62 connected with the docking station 2A is in a print standby state. Similarly, in a case in which the background color of the printer button 72 is blue, it can be aware that the printer 62 connected with the docking station 2B is in print. Further, in a case in which the background color of the printer button 73 is red, it can be aware that the printer 62 connected with the docking station 2C is in error.

After the images of the printer buttons 71, 72 and 73 are displayed on the touch panel 35, the processor 31 confirms whether or not the tablet terminal 1 is mounted on the docking station 2 (ACT 23). In a case in which the tablet terminal 1 is not mounted on the docking station 2 (NO in ACT 23), the processor 31 confirms whether or not a wireless signal is received through the wireless LAN unit 37 (ACT 24). In a case of not receiving the wireless signal (NO in ACT 24), the processor 31 returns to carry out the processing of confirming whether or not the tablet terminal 1 is mounted on the docking station 2. That is, the processor 31 waits for the mounting of the tablet terminal 1 on the docking station 2, or the receiving of a new wireless signal.

In a case of receiving the wireless signal (YES in ACT 24), the processor 31 determines the type of the wireless signal (ACT 25, ACT 26, ACT 27 and ACT 28).Then, if the wireless signal is the printing signal, the printing ending signal, the printer error signal or the error release signal, the processor 31 updates the printer monitoring table 5.

Specifically, in a case of receiving the printing signal (YES in ACT 25), the processor 31 rewrites the value of the printing status, which belongs to a record including the machine ID of the docking station 2 serving as the transmission source of the printing signal, with "1" (ACT 29). In a case of receiving the printing ending signal (YES in ACT 26), the processor 31 rewrites the value of the printing status, which belongs to a record including the machine ID of the docking station 2 serving as the transmission source of the printing ending signal, with "0" (ACT 30). In a case of receiving the printer error signal (YES in ACT 27), the processor 31 rewrites the value of the printing status, which belongs to a record including the machine ID of the docking station 2 serving as the transmission source of the printer error signal, with "2" (ACT 31). In a case of receiving the error release signal (YES in ACT 28), the processor 31 rewrites the value of the printing status, which belongs to a record including the machine ID of the docking station 2 serving as the transmission source of the error release signal, with "0" (ACT 32).

If the printing status is rewritten, the processor 31 updates the images of the printer buttons 71, 72 and 73 (ACT 33). That is, for example, if the printing status is rewritten from "0" to "1", the processor 31 changes the background color of the printer buttons 71, 72 and 73 from white to blue. For example, if the printing status is rewritten from "1" to "2", the processor 31 changes the background color of the printer buttons 71, 72 and 73 from blue to red. For example, if the printing status is rewritten from "2" to "0", the processor 31 changes the background color of the printer buttons 71, 72 and 73 from red to white.

Then, the processor 31 returns to carry out the processing in ACT 23 to wait for the mounting of the tablet terminal 1 on the docking station 2, or the receiving of a next wireless signal.

Further, in a case in which the wireless signal is not the signals described above, the processor 31 executes other processing (ACT 34). Then the processor 31 returns to carry out the processing in ACT 23 to wait for the mounting of the tablet terminal 1 on the docking station 2, or the receiving of a next wireless signal.

For example, if the aforementioned pin of the connector 14 is energized, the processor 31 deems that the tablet terminal 1 is mounted on the docking station 2. In this case (YES in ACT 23), the processor 31 erases the images of the printer buttons 71, 72 and 73 (ACT 35). Then, the processor 31 returns to carry out the processing of monitoring whether or not the tablet terminal 1 is detached from the docking station 2 (ACT 21).

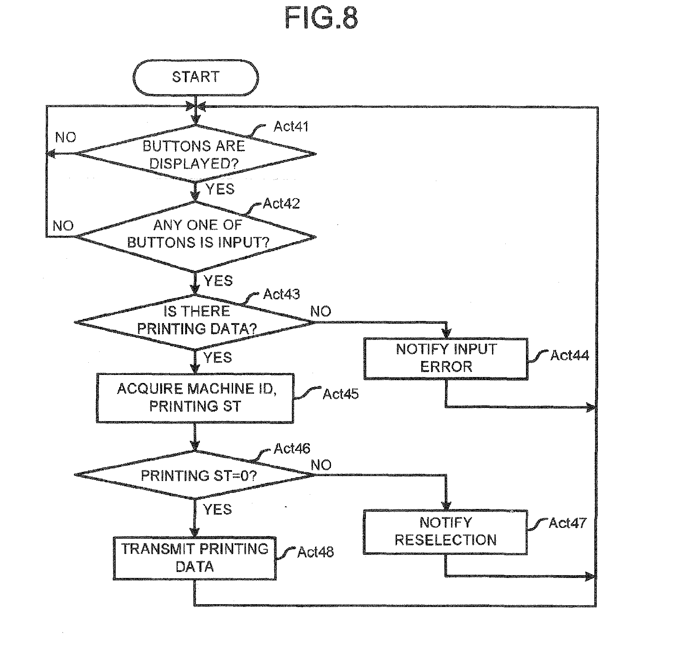

Fig. 8 is a flowchart illustrating the main procedures of information processing relating to the function 5 and the function 7 executed by the processor 31 of each of the tablet terminals 1 executed by the processor 31 of each tablet terminal 1 according to the control program. Further, the processing content described below together with that shown in Fig. 8 is an example, and various processing that can obtain same results is applicable.

The processor 31 confirms whether or not the images of the printer buttons 71, 72 and 73 is being displayed (ACT 41). If it is not being displayed (NO in ACT 41), the processor 31 waits until the images of the printer buttons 71, 72 and 73 are displayed on the touch panel 35.

If the images of the printer buttons 71, 72 and 73 are being displayed (YES in ACT 41), the processor 31 confirms whether or not any one of the printer buttons 71, 72 and 73 is touched and input (ACT 42). In a case in which none of the printer buttons 71, 72 and 73 is touched and input (NO in ACT 42), the processor 31 confirms again whether or not the images of the printer buttons 71, 72 and 73 are being displayed (ACT 41). Then, if the images of the printer buttons 71, 72 and 73 are being displayed (YES in ACT 41), the processor 31 waits until any one of the printer buttons 71, 72 and 73 is touched and input (ACT 42).

In a case in which any one of the printer buttons 71, 72 and 73 is touched and input (YES in ACT 42), the processor 31 confirms whether or not a receipt printing data has been created (ACT 43). If the receipt printing data has not been created yet (NO in ACT 43), the printer button 71, 72 or 73 is input by mistake. In this case, the processor 31 notifies a guidance of a message indicating that the input of the printer button 71, 72 or 73 is an error through displaying it on the touch panel 35 (ACT 44). Then, the processor 31 returns to carry out the processing in ACT 41 to confirm whether or not the images of the printer buttons 71, 72 and 73 are being displayed.

In a case in which any one of the printer buttons 71, 72 and 73 is touched and printed in a state in which the receipt printing data is created (YES in ACT 42 and ACT 43), the processor 31 acquires a machine ID and a printing status from the record including a location name displayed on the touched printer button 71, 72 or 73 in the printer monitoring table 5 (ACT 45: selection module). Then, the processor 31 confirms whether or not the printing status is "0" (ACT 46).

In a case in which the printing status is not "0" (NO in ACT 46), the printer 62 which is connected with the docking station 2 specified with the machine ID is in print or in error. In this case, the processor 31 notifies a guidance used for urging a user to reselect a new printer through displaying it on the touch panel 35 (ACT 47: notification module). Then, the processor 31 returns to carry out the processing in ACT 41 to confirm whether or not the images of the printer buttons 71, 72 and 73 are being displayed.

In a case in which the printing status is "0" (YES in ACT 46), the printer 62 which is connected with the docking station 2 specified with the machine ID is in the print standby state. In this case, the processor 31 wirelessly transmits the receipt printing data to the docking station 2 (ACT 48: transmission module). Next, the processor 31 returns to carry out the processing in ACT 41 to confirm whether or not the images of the printer buttons 71, 72 and 73 are being displayed.

After the docking station 2 receives the receipt printing data through the wireless LAN unit 54, the processor 51 of this docking station 2 outputs the receipt printing data to the printer 62. In this way, the printer 62 is driven to print the receipt printing data on a receipt paper and then to issue the receipt paper as a receipt (issuing module).

In this way, in the store 3 where the commodity sales data processing apparatus of the present embodiment is introduced, the person 4 in charge of customers brings the tablet terminal IX to provide customer service. Then, the person 4 in charge of customers inputs data relating to sales and data relating to checkout of commodities purchased by the customer through the tablet terminal IX. Then the receipt printing data is created in the tablet terminal IX. At this time, since the images of the printer buttons 71, 72 and 73 are displayed in the screen 11 of the tablet terminal IX, the person 4 in charge of customers first confirms a docking station 2 nearest to the current location where the person 4 in charge of customers is located.

It is assumed that the docking station 2C is nearest to the current location. In that case, the person 4 in charge of customers confirms the background color of the printer button 73. Herein, if the background color is white, the printer 62 of the docking station 2C is in the print standby state. Consequently, the person 4 in charge of customers touches the printer button 73. Then a receipt is issued from the printer 62 of the docking station 2C.

In this way, in accordance with the present embodiment, the receipt can be issued from the printer 62 of the docking station 2C which is nearest to the current location. Thus, compared with a case of issuing a receipt from the printer 62 of the docking station 2A or 2B which is away from the current location, it is possible to reduce the waste of time required to transfer the receipt.

On the other hand, if the background color of the printer button 73 is blue or red, the printer 62 of the docking station 2C is in print or in error. Therefore, the person in charge of customers confirms a docking station 2 which is second nearest to the current location.

It is assumed that the docking station 2B is the second nearest to the current location. In that case, the person in charge of customers confirms the background color of the printer button 72. Herein, if the background color is white, the printer 62 of the docking station 2B is in the print standby state. Therefore, the person in charge of customers touches the printer button 72. Then a receipt is issued from the printer 62 of the docking station 2B.

In this way, in accordance with the present embodiment, in a case in which the printer 62 of the docking station 2C which is nearest to the current location is in print or in error, the receipt can be issued from the printer of the docking station 2B which is second nearest to the current location. Thus, there is no need to wait for the printing completion or error release of the printing operation of the printer 62 of the docking station 2C which is nearest to the current location. In this case, because the receipt can be issued from the printer 62 of the docking station 2B which is second nearest to the current location, it is also possible to reduce the waste of time required to transfer the receipt.

Further, the present invention is not limited to the embodiments described above.

For example, in the embodiment described above, whether or not the tablet terminal 1 is detached from the docking station 2 is monitored by determining whether or not the specified pin of the connector 14 is energized. The monitoring module is not limited to this case. As another embodiment, by monitoring whether the battery 39 is charging or discharging, it is also possible to monitor whether or not the tablet terminal 1 is detached from the docking station 2.

Further, in the embodiment described above, the printer buttons 71, 72 and 73 are displayed on the screen 11 of the touch panel 35 at the timing when the tablet terminal 1 is detached from the docking station 2. The timing when the printer buttons 71, 72 and 73 are displayed is not limited to this case. As another embodiment, the printer buttons 71, 72 and 73 may be displayed on the screen 11 of the touch panel 35 at the timing when the checkout data is input and the receipt printing data is created.

Fig. 10 illustrates an example of the images of the printer buttons 71, 72 and 73 in another embodiment.

In Fig. 10, the screen 11 is deemed as the floor of the store 3. The printer buttons 71, 72 and 73 are respectively installed at locations where the docking stations 2A, 2B and 2C are arranged. Further, the current location of the person in charge of customers who brings tablet terminal IX is represented by a double circle mark 74. By adopting such a screen 11, it is easy to understand the distances from the current location to all the docking stations 2A, 2B and 2C.

Furthermore, in the embodiment described above, the state of the printer 62 can be identified by varying the background color with the values of the printing status stored in the printer monitoring table 5. The example of display capable of identifying the state of the printer 62 is not limited to the difference of background color. For example, the example of display may be set to only flash the printer button corresponding to the printer 62 that is in the print standby state. In addition, the printer button corresponding to the printer 62 that is in error may be set to be not displayed.

In general, the transfer of the tablet terminal 1 is carried out in a state in which programs such as the control program are stored in the flash ROM 32. However, the present invention is not limited to this case; and the control program transferred separately from the tablet terminal 1 may be written into a writable storage device of the tablet terminal 1 through the operation by a user. The transfer of the control program can be recorded in a removable recording medium, or carried out through a communication via a network. The form of the recording medium is not limited as long as the recording medium can store programs like a CD-ROM and a memory card and is readable by an apparatus. Further, the function obtained by an installed or downloaded program can also be realized through the cooperation with an OS (operating system) installed in the apparatus.

Further, the portable information processing terminal is not limited to the tablet terminal 1, and may be, for example, a smart phone.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope of the invention.

## Claims

1. A commodity sales data processing apparatus which comprises a portable information processing terminal carrying an input device and a plurality of docking stations including printers, and is possible to carry out wireless communication between the information processing terminal and each of the docking stations, wherein
the information processing terminal comprises
a sales processing module configured to carry out a sales processing on commodity sales data on basis of data relating to commodity sales processing input through the input device,
a checkout processing module configured to process checkout data on basis of data relating to checkout processing input through the input device,
a creation module configured to create printing data of a receipt on basis of the commodity sales data and the checkout data,
a selection module configured to select any one of the plurality of docking stations on the condition that the information processing terminal can be detached from the docking station, and
a transmission module configured to transmit the printing data of the receipt created by the creation module to the docking station selected by the selection module; and
the docking station comprises an issuing module configured to output the printing data to the printer to issue the receipt when receiving the printing data of the receipt from the information processing terminal.

2. The commodity sales data processing apparatus according to claim 1, wherein
the information processing terminal further comprises a display device and a display module which displays an image used for a user to designate any one of the plurality of docking stations on the display device, and
the selection module selects a docking station that is designated from the image through the input device.

3. The commodity sales data processing apparatus according to claim 2, wherein
the docking station further comprises an informing module which informs the information processing terminal of a state of the printer; and
the information processing module is possible to identify the state of the printer of each of the plurality of docking stations through the image displayed by the display module.

4. The commodity sales data processing apparatus according to claim 3, wherein the information processing terminal further comprises a notification module configured to give a notification on urging a user to reselect a docking station when a printer of the docking station designated from the image through the input device is in print or in error.

5. An information processing terminal which is capable of carrying out wireless communication with each of the plurality of docking stations including printers at least to constitute a commodity sales data processing apparatus, according to any one of claims 1 to 4, comprising:
an input device;
a sales processing module configured to carry out a sales processing on commodity sales data on basis of data relating to commodity sales processing input through the input device;
a checkout processing module configured to process checkout data on basis of data relating to checkout processing input through the input device;
a creation module configured to create printing data of a receipt on basis of the commodity sales data and the checkout data;
a selection module configured to select any one of the plurality of docking stations on the condition that the information processing terminal can be detached from the docking station; and
a transmission module configured to transmit the printing data of the receipt created by the creation module to the docking station selected by the selection module.

6. A control method for the information processing terminal, including:
carrying out a sales processing on commodity sales data on basis of data relating to commodity sales processing input through an input device;
carrying out a processing on checkout data on basis of data relating to checkout processing input through the input device;
creating printing data of a receipt on basis of the commodity sales data and the checkout data;
selecting any one of the plurality of docking stations on the condition that the information processing terminal can be detached from the docking station; and
transmitting the created printing data of the receipt to the selected docking station.

7. The control method for the information processing terminal, according to claim 6, further including:
displaying an image used for a user to designate any one of the plurality of docking stations, and
selecting a docking station that is designated from the image through the input device.

8. The control method for the information processing terminal, according to claim 6 or 7, further including:
informing the information processing terminal of a state of the printer so that the information processing module is possible to identify the state of the printer of each of the plurality of docking stations through the image displayed at the displaying step.

9. The control method for the information processing terminal, according to any one of claims 6 to 9, further comprising
giving a notification on urging a user to reselect a docking station when a printer of the docking station designated from the image through the input device is in print or in error.

10. A control program for causing an information processing terminal computer consisting of a commodity sales data processing apparatus capable of carrying out wireless communication with a plurality of docking stations including a printer, to execute as an information processing apparatus according to any one of claims 1 to 4.
